# EUROPÄISCHE PATENTSCHRIFT

(11) **EP 2 467 271 B1**
(45) Veröffentlichungstag und Bekanntmachung des Hinweises auf die Patenterteilung: **26.11.2014**
(21) Anmeldenummer: 10739511.3
(22) Anmeldetag: 17.07.2010
(51) Int. Cl.: B62D 17/00, B60G 7/00

(54) **VORRICHTUNG ZUM VERSTELLEN VON STURZ UND/ODER SPUR**
DEVICE FOR THE ADJUSTMENT OF CAMBER AND/OR TOE-IN AND TOE-OUT
DISPOSITIF POUR REGLAGE DU CARROSSAGE ET/OU DU PINCEMENT

(30) Priorität: 21.08.2009 DE 102009038423
(43) Veröffentlichungstag der Anmeldung: 27.06.2012
(73) Patentinhaber: Audi AG, 85045 Ingolstadt (DE)
(72) Erfinder: MICHEL, Wilfried, 93339 Riedenburg (DE); MEITINGER, Karl-Heinz, 81667 München (DE); KOSSIRA, Christoph, 85053 Ingolstadt (DE); MÜLLER, Hugo, 86701 Rohrenfels-Ballersdorf (DE); SCHMID, Wolfgang, 85354 Freising (DE)
(74) Vertreter: Asch, Konrad
(86) Internationale Anmeldenummer: PCT/EP2010/004375
(87) Internationale Veröffentlichungsnummer: WO 2011/020534

(56) Entgegenhaltungen:
- EP-A1- 2 060 416
- WO-A1-98/16418
- DE-A1-102004 049 296
- DE-A1-102008 011 367
- DE-A1-102008 048 568
- US-A1- 2006 017 251
- US-B1- 6 561 304

## Beschreibung

Die Erfindung betrifft eine Vorrichtung zum Verstellen von Sturz und/oder Spur der Räder von Radaufhängungen, insbesondere für Kraftfahrzeuge, gemäß dem Oberbegriff des Patentanspruches 1.

Aus der DE 10 2004 049 296 A1 ist eine Vorrichtung zum Verstellen von Sturz und/oder Spur eines Fahrzeugrads eines Kraftfahrzeugs bekannt. Die Vorrichtung weist einen Radträger auf, der aus einem radseitigen Trägerteil und einem achsseitigen Führungsteil besteht. Zwischen diesen sind zueinander verdrehbare Drehteile geschaltet, wobei zur Einstellung von Spur und/oder Sturz zumindest eines der beiden Drehteile über einen Antrieb und eine Getriebestufe in beiden Drehrichtungen verstellbar ist.

Die zwischen dem Trägerteil und dem Führungsteil geschalteten Drehteile können mit Hilfe jeweils zugeordneter Antriebseinheiten gemäß einer SollWertvorgabe beliebig verdreht werden. Je nach Kombination der Drehwinkel ergibt sich die gewünschte Spur-/Sturzeinstellung. Das heißt, das radseitige Trägerteil kann zum, mit den Lenkern ortsfest verbundenen Führungsteil bis zu mehrere Winkelgrade schräg gestellt werden. Voraussetzung dafür sind jedoch zwei gesonderte Antriebe, welche die beiden Drehteile unabhängig voneinander drehen können. Die Antriebseinheiten sind in der Regel auf hohe Drehzahlen bei kleinem Drehmoment ausgelegt und treiben über eine Getriebestufe ins Langsame. Daraus resultiert bei vorgegebener Leistung ein hohes Drehmoment. Das Getriebe kann beispielhaft von einer Stirnradstufe, gegebenenfalls einem Planetensatz gebildet sein.

Aus der DE A 10 2008 011 367 ist eine gattungsgemäße Vorrichtung bekannt, bei der zumindest eines der Drehteile über einen Antrieb und eine Getriebestufe in beiden Drehrichtungen verstellbar ist. Die Getriebestufe für das Drehteil weist ein feststehendes, innenverzahntes Hohlrad auf. Aus der US-A-6561304 ist eine Radaufhängung mit einem Harmonic-Drive-Getriebe gezeigt. Aus der US-A-2006/0017251 ist eine Radaufhängung mit einem Stabilisator bekannt, der aus zwei zueinander verdrehbaren Stabilisatorteilen aufgebaut ist. Aus der EP-A-2060416 ist eine aktive Hinterachslenkung für ein Kraftfahrzeug bekannt, mit der der Radsturz auf definierte Fahrsituationen des Kraftfahrzeuges einstellbar ist.

Aufgabe der Erfindung ist es, eine Vorrichtung bereitzustellen, die baulich besonders platzsparend in Radaufhängungen integrierbar ist und die durch große, verwirklichbare Übersetzungsverhältnisse geringe Verstellkräfte und präzise Verstellwege ermöglicht.

Diese Aufgabe wird erfindungsgemäß mit den Merkmalen des Patentanspruches 1 gelöst. Vorteilhafte Weiterbildungen der Erfindung beschreiben die abhängigen Ansprüche.

Gemäß dem kennzeichnenden Teil des Patentanspruches 1 ist das Getriebe keine Stirnradstufe oder ein Planetensatz, sondern das Getriebe ist für zumindest eines der Drehteile als Harmonic-Drive-Getriebe mit einer antreibenden, elliptischen Antriebsscheibe, einer auf der Antriebsscheibe flexibel gelagerten Zahnradhülse und einem feststehenden, innenverzahnten Hohlrad ausgeführt. Derartige Harmonic-Drive-Getriebe sind an sich aus dem Stand der Technik bekannt. Dabei weist die abtreibende Zahnradhülse eine geringere Zähnezahl als das Hohlrad auf, so dass bei einer jeden Umdrehung der antreibenden Antriebsscheibe eine Drehwinkeldifferenz zum stehenden Hohlrad erzeugt und zur Verstellung genutzt wird. Dadurch lassen sich Übersetzungsverhältnisse von zum Beispiel 50 bis 100 erzielen, die eine besonders leichtgängige und präzise Verstellung des Drehteils bei insbesondere in radialer Erstreckung nur geringem Bauraum ermöglichen.

Das Harmonic-Drive-Getriebe besteht im Sinne einer Bauteilreduzierung aus wenigen kompakten Teilen und kann auf geringstem Bauraum hohe Übersetzungen bereitstellen. So sind mit der elliptischen Antriebsscheibe, das heißt dem Wave-Generator, der darauf flexibel gelagerten Zahnradhülse und dem feststehenden innenverzahnten Hohlrad lediglich drei Bauteile für das Getriebe erforderlich. Das im Betrieb entstehende rotatorische Massenträgheitsmoment ist dabei äußerst gering.

Für eine kompakte Ausführung kann das Harmonic-Drive-Getriebe, insbesondere dessen elliptische Antriebsscheibe, zumindest teilweise radial innerhalb des Drehteils angeordnet sein. Das Drehteil kann hohlzylindrisch mit einem inneren Montageraum gebildet sein, in dem teilweise das Harmonic-Drive-Getriebe angeordnet sein kann.

Erfindungsgemäß ist die Zahnradhülse fest mit dem Drehteillsverbunden.

Bevorzugt bildet das Drehteil zugleich auch die Zahnradhülse, die zwischen dem Hohlrad und der Antriebsscheibe des Harmonic-Drive-Getriebes geschaltet ist. In diesem Fall ist die Zahnradhülse unmittelbar mit dem Drehteil verbunden. Das Hohlrad ist dabei unmittelbar am Trägerteil oder am Führungsteil befestigt, und zwar radial außerhalb des Drehteils bzw. der Zahnradhülse.

Besonders bevorzugt kann für jedes der Drehteile jeweils ein Harmonic-Drive-Getriebe vorgesehen sein, von denen das eine Getriebe an dem Trägerteil und das zweite Getriebe an dem Führungsteil angeordnet ist und jeweils auf eines der Drehteile wirkt.

Baulich besonders günstig kann des Weiteren das Harmonic-Drive-Getriebe über einen Elektromotor angetrieben sein, dessen Rotor koaxial zur elliptischen Antriebsscheibe des Getriebes im Trägerteil und/oder im Führungsteil gelagert ist. Dies ermöglicht eine axial und radial besonders gedrängte Anordnung des gesamten Stelltriebes innerhalb der Radaufhängung. Bevorzugt kann der Elektromotor als ein Hohlmotor ausgeführt sein, durch dessen Hohlraum eine Gelenkwelle geführt werden kann.

Dabei können zur Erzielung einer gewichtsgünstigen Konstruktion die Antriebsscheibe und der Rotor jeweils um eine gemeinsame Lagerhülse angeordnet sein, wobei der Stator des Elektromotors um den Rotor herum im Führungsteil und/oder im Trägerteil angeordnet ist. Damit ist es beispielsweise auch möglich, durch die Konstruktion hindurch eine das Rad des Kraftfahrzeuges antreibende Gelenkwelle bis zum entsprechenden Radflansch zu führen.

Eine biegesteife und fertigungstechnisch günstige Konstruktion wird ferner erzielt, wenn die den Rotor des Elektromotors tragende Lagerhülse beiderseits des Rotors über Wälzlager im Führungsteil und/oder im Trägerteil gelagert ist.

Des Weiteren können die Drehteile über je ein Wälzlager auf einem verlängerten Abschnitt der Lagerhülse drehbar gelagert und mit der abtreibenden, auf der Antriebsscheibe flexibel gelagerten Zahnradhülse des Harmonic-Drive-Getriebes trieblich verbunden sein. Dies ermöglicht eine günstige Beherrschbarkeit der Fertigungstoleranzen der zusammenwirkenden Funktionsteile und schafft zudem eine vormontierbare Montageeinheit.

Zwischen dem radseitigen Trägerteil und dem achsseitigen Führungsteil kann ein zusätzliches Kupplungselement geschaltet sein, über das ein Drehmoment, etwa ein Bremsmoment, vom radseitigen Trägerteil auf das achsseitige Führungsteil und damit zum Fahrzeugaufbau übertragen werden kann. Das Kupplungselement kann ein das Führungsteil mit dem Trägerteil kardanisch verbindender Metallbalg oder ein Kardangelenk sein, das radial außerhalb der Drehteile angeordnet ist. Bauraumgünstig kann das Harmonic-Drive-Getriebe radial innerhalb des Kupplungselementes angeordnet sein. So kann zur Erzielung einer in radialer Richtung kompakt bauenden Anordnung das mit der Zahnradhülse zusammenwirkende, innenverzahnte Hohlrad des Harmonic-Drive-Getriebes radial innerhalb von an dem Führungsteil und dem Trägerteil ausgebildeten Auslegern positioniert sein, an welchen ein das Führungsteil und das Trägerteil kardanisch verbindendes Kardangelenk gelagert ist.

Schließlich kann der trägerseitige Elektromotor radial innerhalb eines einen Radflansch für ein Rad des Kraftfahrzeuges und gegebenenfalls eine Bremsscheibe aufnehmenden Radlagers und im wesentlichen in einer einheitlichen Rotationsebene dazu positioniert sein, woraus eine in axialer Richtung besonders kurz bauende, robuste Radlagerung und Anordnung des Elektromotors resultiert. Baulich vorteilhaft kann dazu der Radflansch topfförmig ausgeführt und sein der Fahrzeuginnenseite zugewandter Nabenabschnitt den trägerseitigen Elektromotor umschließen.

Ein Ausführungsbeispiel der Erfindung ist im Folgenden mit weiteren Einzelheiten näher erläutert. Die schematische Zeichnung zeigt in:
- Fig. 1: eine Prinzipdarstellung einer Radaufhängung für Kraftfahrzeuge mit Radführungselementen und einem mehrteiligen Radträger mit verdrehbaren Drehteilen zur Verstellung der Spur und des Sturzes des Rades;
- Fig. 2: den Radträger gemäß Fig. 1 in einer einen 90°-Winkel einschließenden Schnittdarstellung entlang der Raddrehachse, mit zwei die Drehteile betätigenden Harmonic-Drive-Getrieben;
- Fig. 3: den Radträger gemäß den Fig. 1 und 2 in einem senkrechten Längsschnitt; und
- Fig. 4: ein Prinzipbild eines dem Stand der Technik entsprechenden Harmonic-Drive-Getriebes.

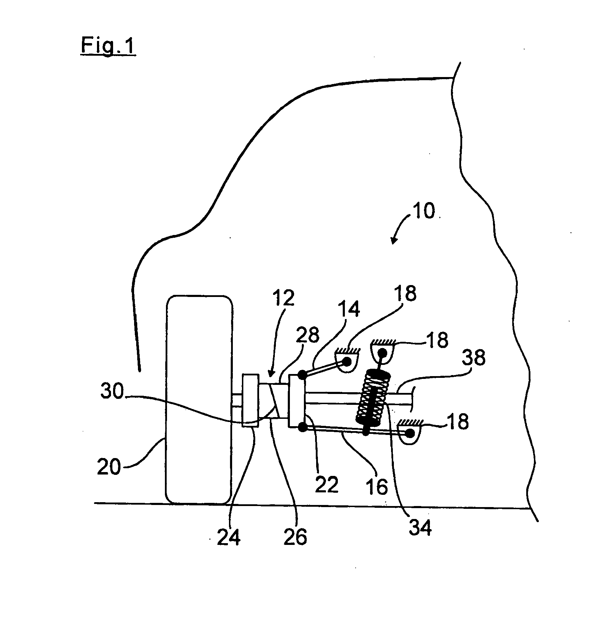

In der **Fig. 1** ist eine hintere Radaufhängung 10 für Kraftfahrzeuge grob schematisch dargestellt, bei der ein Radträger 12 über Querlenker 14, 16 als Radführungselemente an einem nur angedeuteten Aufbau 18 angelenkt ist.

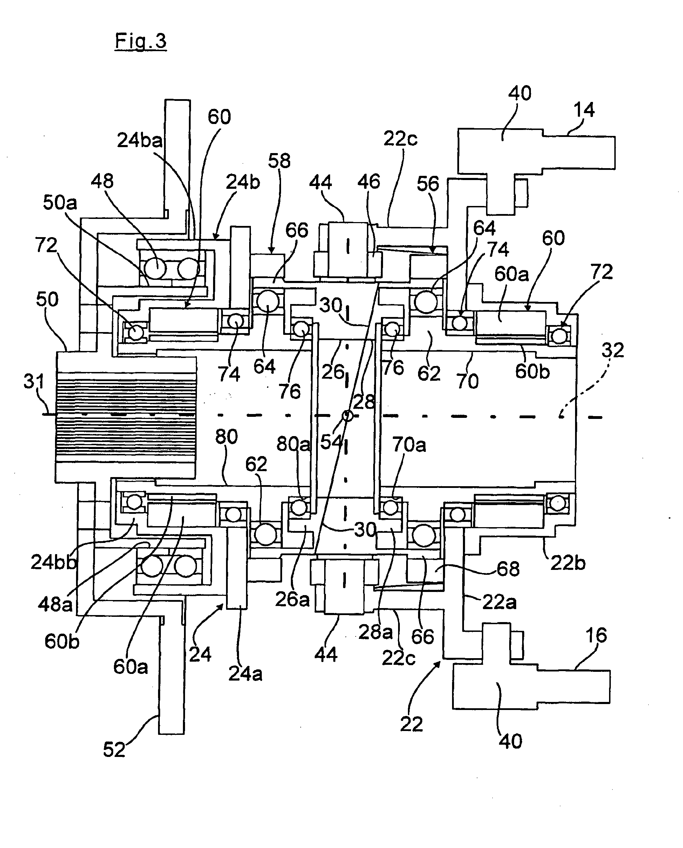

Der das Rad 20 drehbar aufnehmende Radträger 12 ist unterteilt in ein an den Querlenkern 14, 16 angelenktes Führungsteil 22, ein das Rad 20 über ein entsprechendes Radlager aufnehmendes Trägerteil 24 und in zwei verdrehbar am Führungsteil 22 und am Trägerteil 24 gelagerte Drehteile 26, 28 mit einander zugewandten, stirnseitigen Schrägflächen 30. Das Drehteil 26 ist mit seiner Mittelachse 31 (vergleiche **Fig. 3**) mit Bezug auf das Drehtetil 28 kippbar, das um seine Drehachse 32 drehen kann. Ein Verdrehen eines oder beider Drehteile 26, 28 bewirkt ein Verkippen des Trägerteils 24 relativ zum Führungsteil 22 und dementsprechend ein Verstellen der Spur und/oder des Sturzes des Rades 20 der Radaufhängung 10.

Die Radlast ist in bekannter Weise über eine Tragfeder 34 gegenüber dem Aufbau 18 abgestützt. Innerhalb der Tragfeder 34 ist ein Teleskop-Stoßdämpfer angeordnet. Ferner ist das Rad 20 über eine nur angedeutete Gelenkwelle 38 eines Antriebsaggregates angetrieben, wobei sich die Gelenkwelle 38 durch den Radträger 12 erstreckt und trieblich mit dem Rad 20 verbunden ist.

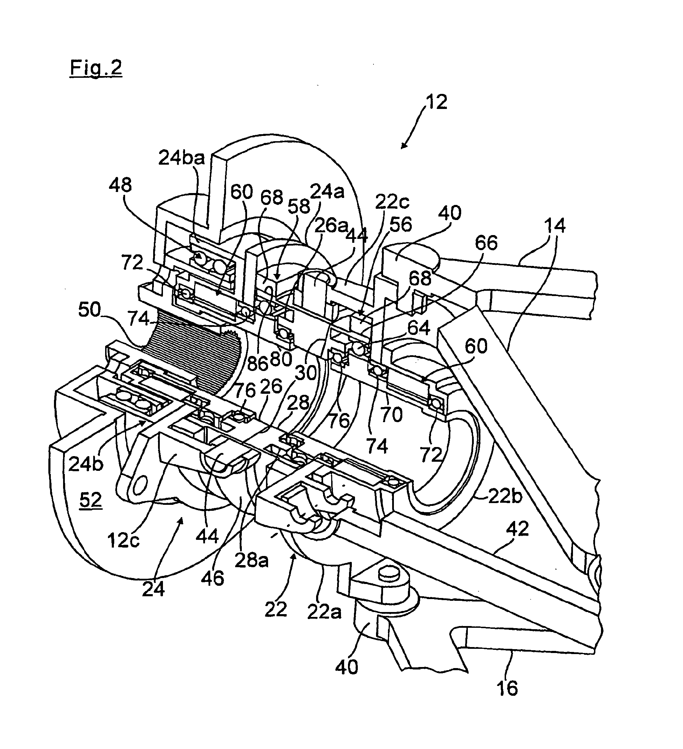

Die **Fig. 2** und **3** zeigen den Radträger 12 der Radaufhängung 10 im Detail.

Dabei ist das Führungsteil 22 mit einer Basisplatte 22a über einheitlich mit 40 bezeichnete Gelenke an dem oberen Lenker 14, an dem unteren Lenker 16 und an einem in der **Fig. 1** nicht ersichtlichen Lenker 42 angelenkt und trägt ein Nabenteil 22b. Ferner weist das Führungsteil 22 zwei horizontal nach außen ragende und diametral gegenüberliegende Ausleger 22c auf, an denen über Gelenkzapfen 44 ein Stützring 46 begrenzt schwenkbar gelagert ist.
Das Trägerteil 24 des Radträgers 12 weist ebenfalls eine Basisplatte 24a und ein daran befestigtes Nabenteil 24b auf. Von der Basisplatte 24a ragen ebenfalls zwei diametral gegenüberliegende, jedoch um 90° zu den Auslegern 22c versetzte und nach innen ragende Ausleger 12c ab, die über zwei weitere Gelenkzapfen 44 mit dem Stützring 46 schwenkbar verbunden sind. Die Ausleger 12c, 22c bilden mit dem Stützring 46 ein Kardangelenk, welches ein Verschwenken bzw. Verkippen des Trägerteiles 24 relativ zum Führungsteil 22 zulassen, in Umfangsrichtung aber formschlüssig wirken.

Das Nabenteil 24b des Trägerteiles 24 trägt an seiner Außenumfangswand 24ba ein doppelreihiges Kugellager bzw. Radlager 48, über das eine mit einer Kerbverzahnung versehene Radnabe 50 drehbar gelagert ist. An der Radnabe 50 sind mittels nicht dargestellter Radschrauben eine Bremsscheibe 52 einer Scheibenbremse des Kraftfahrzeuges und das Rad 20 **(****Fig. 1****)** befestigt.

Zwischen dem Trägerteil 24 und dem Führungsteil 22 des Radträgers 12 sind die beiden Drehteile 26, 28 koaxial zur Drehachse 32 verdrehbar gelagert, deren aneinander anliegend, stirnseitige Schrägflächen 30 (vergleiche **Fig. 3**) durch gleich- oder gegensinniges Verdrehen der Drehteile 26, 28 das Verkippen des Trägerteiles 24 in der Vertikalachse, (Spurverstellung) und/oder in der Horizontalachse (Sturzverstellung) bewirken. Wie die **Fig. 3** zeigt, liegt dabei der Schnittpunkt 54 der Verbindungsgeraden der Gelenkachsen der Gelenkzapfen 44 mit einer Verbindungsgeraden der Schrägflächen 30 exakt auf den Drehachsen 31, 32 der Drehteile 26, 28.

Die Drehteile 26, 28 werden mittels zweier Harmonic-Drive-Getriebe 56, 58 über koaxial angeordnete Elektromotoren 60 betätigt.

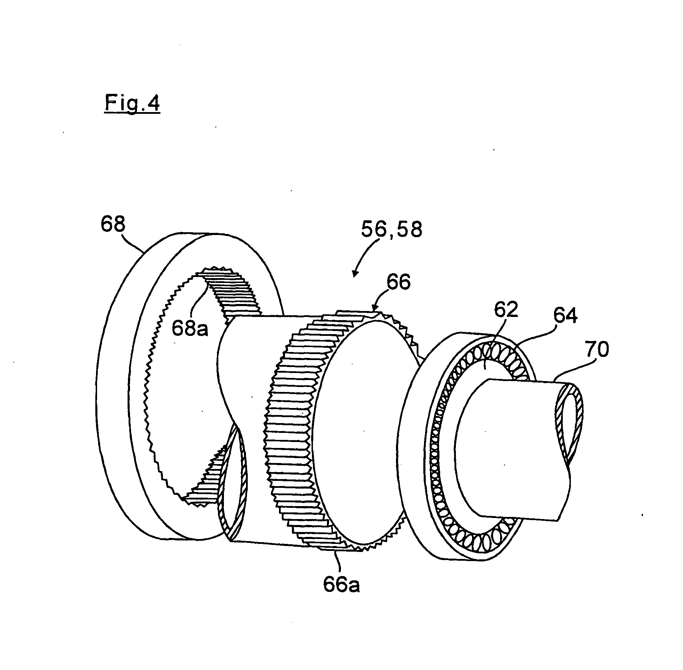

Mit Bezug auf die Explosionsdarstellung der **Fig. 4** werden zunächst die an sich aus dem Stand der Technik bekannten Harmonic-Drive-Getriebe 56, 58 beschrieben. Der Einfachheit halber werden die Bezugszeichen auch in der anschließenden Beschreibung am Radträger 12 verwendet.

Die Harmonic-Drive-Getriebe 56, 58 weisen gemäß **Fig. 4** im Wesentlichen eine antreibende, elliptische Antriebsscheibe 62, das heißt einen sogenannten Wave-Generator, ein um deren Außenumfang angeordnetes, flexibles Wälzlager 64, eine durch eine flexible Stahlhülse gebildete, abtreibende Zahnradhülse 66 mit einer Außenverzahnung 66a und schließlich ein ortsfest angeordnetes, eine Innenverzahnung 68a aufweisendes Hohlrad 68 auf.

Die Antriebsscheibe 62 wird mit dem Wälzlager 64 in die flexible Zahnradhülse 66 eingesetzt, so dass diese ebenfalls eine elliptische Außenform annimmt.

Die Zahnradhülse 66 wiederum ist in das rotationssymmetrische Hohlrad 68 eingesetzt, wobei jeweils nur mehrere Zähne der Zahnradhülse 66 mit dem Hohlrad 68 in Eingriff sind. Zudem ist die Zahnradhülse 66 mit weniger Zähnen als das Hohlrad 68 ausgeführt.

Wird die Antriebsscheibe 62 über den Elektromotor 60 um einen Drehwinkel von 360° angetrieben, so wälzt sich die über das Wälzlager 64 flexibel geführte Zahnradhülse 66 in dem Hohlrad 68 ab, wobei es aufgrund der geringeren Zähnezahl eine entgegen der Antriebsrichtung der Antriebsscheibe 62 gerichtete, geringe Verdrehung relativ zum feststehenden Hohlrad 68 erfährt, die die Verstellung der Drehteile 26, 28 bewirkt.

Die Harmonic-Drive-Getriebe 56, 58 **(****Fig. 2** **und** **3****)** sind koaxial zur Drehachse 32 im Radträger 12 und radial innerhalb der Ausleger 22a, 24a des Führungsteiles 22 und des Trägerteiles 24 angeordnet.

So ist die antreibende Antriebsscheibe 62 des Harmonic-Drive-Getriebes 56 einstückig mit einer Lagerhülse 70 ausgebildet, die in Axialrichtung beiderseits des Stators 60a des Elektromotors 60 über Wälzlager 72, 74 im Führungsteil 22 bzw. im Nabenteil 22b und im Basisteil 22a drehbar gelagert ist.

Um den ellipitschen Außenumfang der Antriebsscheibe 62 herum ist das flexible Wälzlager 64 angeordnet, das die Zahnradhülse 66 entsprechend aufnimmt.

Die abtreibende Zahnradhülse 66 ist an dem benachbart angeordneten Drehteil 28 angeformt, wobei das Drehteil 28 über einen angeformten Lagerhals 28a und ein weiteres Wälzlager 76 auf einem verlängerten Abschnitt 70a der Lagerhülse 70 drehbar gelagert ist.

Die Zahnradhülse 66 kämmt mit dem Hohlrad 68, das an der Basisplatte 22a des Führungsteiles 22 angeschraubt ist.

Der Rotor 60b des Elektromotors 60 ist zwischen den beiden Wälzlagern 72, 74 unmittelbar auf der Lagerhülse 70 angeordnet.

Die Anordnung des Harmonic-Drive-Getriebes 58 und des Elektromotors 60 im Trägerteil 24 des Radträgers 12 ist im wesentlichen spiegelbildlich gleich, so dass für baugleiche Teile gleiche Bezugszeichen verwendet sind.

So ist die Antriebsscheibe 62 wiederum auf einer Lagerhülse 80 ausgebildet, die über Wälzlager 72, 74 im Trägerteil 24 bzw. in dem Basisteil 24a und einer Innenumfangswand 24bb des Nabenteiles 24b drehbar gelagert ist.

Die flexible Zahnradhülse 66 ist an das axial angrenzende Drehteil 26 unmittelbar angeformt, das wiederum über einen angeformten Lagerhals 26a und ein Wälzlager 76 auf einem verlängerten Abschnitt 80a der Lagerhülse 80 verdrehbar gelagert ist.

Der Elektromotor 60 ist zwischen den beiden Wälzlagern 72, 74 im Nabenteil 24b angeordnet, wobei dessen Stator 60a in das Nabenteil 24b eingesetzt ist, während dessen Rotor 60b unmittelbar auf der Lagerhülse 80 ausgebildet ist. Wie ersichtlich ist, liegt in baulich günstiger Weise der Elektromotor 60 im wesentlichen in einer einheitlichen Rotationsebene mit dem radial außen positionierten Radlager 48, dessen Lagerinnenring 48a auf einen Nabenabschnitt 50a der topfförmigen Radnabe 50 positioniert ist.

Das Hohlrad 68 des Harmonic-Drive-Getriebes 58 ist mit der Basisplatte 24a des Trägerteiles 24 fest verschraubt.

Durch Ansteuerung der Elektromotoren 60 in der einen oder der anderen Drehrichtung können über die Harmonic-Drive-Getriebe 56 und/oder 58 wie anhand der **Fig. 4** beschrieben die Drehteile 26, 28 gleich- oder gegensinnig derart verdreht werden, dass durch Verkippen des Trägerteiles 24 relativ zum Führungsteil 22 des Radträgers 12 die Spur und/oder der Sturz des Rades 20 der Radaufhängung 10 in gewünschtem Maße veränderbar sind.

Durch das ermöglichte hohe Übersetzungsverhältnis in den Harmonic-Drive-Getrieben 56, 58 kann dabei eine feinfühlige, leichtgängige Spur- und/oder Sturzeinstellung erzielt werden, die zudem nur geringe, gegebenenfalls abzubremsende Rückstellmomente aufweist.

Die zu den Elektromotoren 60 führenden elektrischen Leitungen und deren Verbindung zu einem entsprechenden elektronischem Steuergerät sind nicht dargestellt.

## Patentansprüche

1. Vorrichtung zum Verstellen von Sturz und/oder Spur eines Fahrzeugrads (20) eines Kraftfahrzeugs, mit einem Radträger (12), der ein radseitiges Trägerteil (24) und ein achsseitiges Führungsteil (22) aufweist, zwischen denen zueinander verdrehbare Drehteile (26, 28) geschaltet sind, wobei zur Einstellung von Spur und/oder Sturz zumindest eines der Drehteile (26, 28) über einen Antrieb (60) und eine Getriebestufe in beiden Drehrichtungen verstellbar ist, **dadurch gekennzeichnet, dass** die Getriebestufe für das Drehteil (26, 28) als ein Harmonic-Drive-Getriebe (56, 58) mit einer antreibenden, elliptischen Antriebsscheibe (62), einer auf der Antriebsscheibe (62) flexibel gelagerten Zahnradhülse (66) und einem feststehenden, innenverzahnten Hohlrad (68) ausgeführt ist, und dass die Zahnradhülse (66) fest mit dem Drehteil (26, 28) verbunden ist, und das Hohlrad (68) am Trägerteil (24) oder am Führungsteil (22) befestigt ist.

2. Vorrichtung nach Anspruch 1, **dadurch gekennzeichnet, dass** das Harmonic-Drive-Getriebe (56, 58), insbesondere dessen elliptische Antriebsscheibe (62), zumindest teilweise radial innerhalb des Drehteils (26, 28), insbesondere in einem Hohlraum des Drehteils (26, 28), angeordnet sind.

3. Vorrichtung nach Anspruch 1 oder 2, **dadurch gekennzeichnet, dass** für jedes der beiden Drehteile (26, 28) jeweils ein Harmonic-Drive-Getriebe (56, 58) vorgesehen ist, von denen das eine Getriebe (58) an dem Trägerteil (24) und das zweite Getriebe (56) an dem Führungsteil (22) angeordnet ist und jeweils auf eines der Drehteile (26, 28) wirkt.

4. Vorrichtung nach einem der vorhergehenden Ansprüche, **dadurch gekennzeichnet, dass** der Antrieb ein Elektromotor (60) ist, dessen Rotor (60b), insbesondere koaxial zur elliptischen Antriebsscheibe (62) im Trägerteil (24) und/oder im Führungsteil (22) gelagert ist.

5. Vorrichtung nach Anspruch 4, **dadurch gekennzeichnet, dass** die Antriebsscheibe (62) und der Rotor (60b) von einer gemeinsamen Lagerhülse (70, 80) getragen sind, und/oder dass der Stator (60a) des Elektromotors (60) um den Rotor (60b) herum am Führungsteil (22b) und/oder im Trägerteil (24bb) angeordnet ist.

6. Vorrichtung nach einem der Ansprüche 4 oder 5, **dadurch gekennzeichnet, dass** die den Rotor (60b) des Elektromotors (60) tragende Lagerhülse (70, 80) beiderseits des Rotors (60b) über Wälzlager (72, 74) im Führungsteil (22) und/oder im Trägerteil (24) gelagert ist.

7. Vorrichtung nach einem der vorhergehenden Ansprüche, **dadurch gekennzeichnet, dass** das Drehteil (26, 28) über je ein Wälzlager (76) auf einem verlängerten Abschnitt (70a, 80a) der Lagerhülse (70, 80) drehbar gelagert ist, und insbesondere mit der abtreibenden, auf der Antriebsscheibe (62) flexibel gelagerten Zahnradhülse (66) des Harmonic-Drive-Getriebes (56, 58) trieblich verbunden ist.

8. Vorrichtung nach einem der vorhergehenden Ansprüche, **dadurch gekennzeichnet, dass** zwischen dem Trägerteil (24) und dem Führungsteil (22) ein vorzugsweise außerhalb der Drehteile (26, 28) vorgesehenes Kupplungselement geschaltet ist, insbesondere ein das Führungsteil (22) und das Trägerteil (24) kardanisch verbindender Metallbalg oder ein Kardangelenk, und dass radial innerhalb des Kupplungselements das Harmonic-Drive-Getriebe (56, 58) angeordnet ist.

9. Vorrichtung nach einem der vorhergehenden Ansprüche, **dadurch gekennzeichnet, dass** der trägerseitige Elektromotor (60) radial innerhalb eines einen Radflansch (50) für ein Rad (20) des Kraftfahrzeuges und gegebenenfalls eine Bremsscheibe (52) aufnehmenden Radlagers (48) und im Wesentlichen in einer einheitlichen Rotationsebene dazu positioniert ist.

10. Vorrichtung nach Anspruch 9, **dadurch gekennzeichnet, dass** der Radflansch (50) topfförmig ausgeführt ist, wobei sein der Fahrzeuginnenseite zugewandter Nabenabschnitt (50a) den trägerseitigen Elektromotor (60) umhüllt.

## Claims

1. Device for adjusting camber and/or toe of a vehicle wheel (20) of a motor vehicle, comprising a wheel carrier (12) having a wheel-side carrier part (24) and an axle-side guide part (22), between which rotary parts (26, 28) which are rotatable relative to one another are arranged, at least one of the rotary parts (26, 28) being adjustable in both directions of rotation by means of a drive (60) and a transmission stage in order to set camber and/or toe, **characterised in that** the transmission stage for the rotary part (26, 28) is configured as a harmonic drive transmission (56, 58) having a driving, elliptical drive disc (62), a gear sleeve (66) flexibly supported on the drive disc (62) and a stationary, internally toothed ring gear (68), and **in that** the gear sleeve (66) is rigidly connected to the rotary part (26, 28), and the ring gear (68) is fastened to the carrier part (24) or the guide part (22).

2. Device according to claim 1, **characterised in that** the harmonic drive transmission (56, 58), in particular the elliptical drive disc (62) thereof, is arranged radially inside the rotary part (26, 28) at least in part, in particular in a cavity in the rotary part (26, 28).

3. Device according to either claim 1 or claim 2, **characterised in that** one harmonic drive transmission (56, 58) is provided in each case for each of the two rotary parts (26, 28), of which transmissions the first transmission (58) is arranged on the carrier part (24) and the second transmission (56) is arranged on the guide part (22), and each of which act on one of the rotary parts (26, 28).

4. Device according to any of the preceding claims, **characterised in that** the drive is an electric motor (60), the rotor (60b) of which is supported in the carrier part (24) and/or the guide part (22), in particular coaxially with the elliptical drive disc (62).

5. Device according to claim 4, **characterised in that** the drive disc (62) and the rotor (60b) are carried by a common bearing sleeve (70, 80), and/or **in that** the stator (60a) of the electric motor (60) is arranged on the guide part (22b) and/or in the carrier part (24bb) so as to surround the rotor (60b).

6. Device according to either claim 4 or claim 5, **characterised in that** the bearing sleeve (70, 80) carrying the rotor (60b) of the electric motor (60) is supported in the guide part (22) and/or in the carrier part (24) on both sides of the rotor (60b) by roller bearings (72, 74).

7. Device according to any of the preceding claims, **characterised in that** each rotary part (26, 28) is rotatably supported on an elongated portion (70a, 80a) of the bearing sleeve (70, 80) by a roller bearing (76), and in particular is drivingly connected to the driving gear sleeve (66) of the harmonic drive transmission (56, 58), which gear sleeve is flexibly supported on the drive disc (62).

8. Device according to any of the preceding claims, **characterised in that** a coupling element, in particular either a metal bellows cardanically connecting the guide part (22) and the carrier part (24) or a cardan joint, that is preferably provided outside the rotary parts (26, 28) is arranged between the carrier part (24) and the guide part (22), and **in that** the harmonic drive transmission (56, 58) is arranged radially inside the coupling element.

9. Device according to any of the preceding claims, **characterised in that** the carrier-side electric motor (60) is positioned radially inside a wheel bearing (48), which receives a wheel flange (50) for a wheel (20) of the motor vehicle and optionally a brake disc (52), and substantially in a uniform plane of rotation.

10. Device according to claim 9, **characterised in that** the wheel flange (50) is cup-shaped, the hub portion (50a) thereof, facing the vehicle interior, encompassing the carrier-side electric motor (60).

## Revendications

1. Dispositif de réglage du carrossage et/ou du pincement d'une roue (20) d'un véhicule à moteur, comprenant un support de roue (12), qui présente une partie support (24) côté roue et une partie de guidage (22) côté essieu, entre lesquelles sont intercalées des parties rotatives (26, 28) pouvant tourner l'une par rapport à l'autre, dans lequel, pour régler le pincement et/ou le carrossage, au moins l'une des pièces rotatives (26, 28) peut être déplacée via une commande (60) et un étage de transmission dans les deux sens de rotation, **caractérisé en ce que** l'étage de transmission pour la partie rotative (26, 28) se présente sous la forme d'une transmission de type Harmonic Drive (56, 58) avec une poulie de commande elliptique menante (62), une douille dentée (66) montée de manière souple sur la poulie de commande (62) et une couronne (68) à denture interne fixe et **en ce que** la douille dentée (66) est reliée de manière solidaire à la partie rotative (26, 28) et la couronne (68) est fixée sur la partie support (24) ou sur la partie de guidage (22).

2. Dispositif selon la revendication 1, **caractérisé en ce que** la transmission de type Harmonic Drive (56, 58), en particulier sa poulie de commande elliptique (62), sont aménagées au moins en partie radialement à l'intérieur de la partie rotative (26, 28), en particulier dans un espace creux de la partie rotative (26, 28).

3. Dispositif selon la revendication 1 ou la revendication 2, **caractérisé en ce qu'**il est prévu, pour chacune des deux parties rotatives (26, 28), respectivement une transmission de type Harmonic Drive (56, 58), dont la première transmission (58) est aménagée sur la partie support (24) et la seconde transmission (56) est aménagée sur la partie de guidage (22) et agit respectivement sur l'une des parties rotatives (26, 28).

4. Dispositif selon l'une quelconque des revendications précédentes, **caractérisé en ce que** la commande est un moteur électrique (60) dont le rotor (60b) est monté, en particulier coaxialement par rapport à la poulie de commande elliptique (62), dans la partie support (24) et/ou dans la partie de guidage (22).

5. Dispositif selon la revendication 4, **caractérisé en ce que** la poulie de commande (62) et le rotor (60b) sont supportés par une douille palier commune (70, 80) et/ou **en ce que** le stator (60a) du moteur électrique (60) est aménagé autour du rotor (60b) sur la partie de guidage (22b) et/ou sur la partie support (24bb).

6. Dispositif selon l'une quelconque des revendications 4 ou 5, **caractérisé en ce que** la douille palier (70, 80) portant le rotor (60b) du moteur électrique (60) est monté des deux côtés du rotor via des roulements (72, 74) dans la partie de guidage (22) et/ou dans la partie support (24).

7. Dispositif selon l'une quelconque des revendications précédentes, **caractérisé en ce que** la partie rotative (26, 28) est montée à rotation via respectivement un roulement (76) sur une section prolongée (70a, 80a) de la douille palier (70, 80) et est en particulier reliée au plan opérationnel à la douille dentée menée (66), montée de manière souple sur la poulie de commande (62), de la transmission de type Harmonic Drive (56, 58).

8. Dispositif selon l'une quelconque des revendications précédentes, **caractérisé en ce qu'**entre la partie support (24) et la partie de guidage (22) est intercalé un élément de couplage disposé de préférence à l'extérieur des parties rotatives (26, 28), en particulier un soufflet métallique reliant la partie de guidage (22) et la partie support (24) à la Cardan ou un joint de Cardan et **en ce que** la transmission de type Harmonic Drive (56, 58) est aménagée radialement à l'intérieur de l'élément de couplage.

9. Dispositif selon l'une quelconque des revendications précédentes, **caractérisé en ce que** le moteur électrique côté support (60) est positionné radialement à l'intérieur d'un palier de roue (48) recevant un flasque (50) pour une roue (20) du véhicule à moteur et éventuellement un disque de frein (52) et se trouve sensiblement dans un plan de rotation unitaire par rapport à celui-ci.

10. Dispositif selon la revendication 9, **caractérisé en ce que** le flasque de roue (50) se présente en forme de pot, dans lequel sa section de moyeu (50a) tournée vers l'intérieur du véhicule entoure le moteur électrique côté support (60).
